## Europäisches Patentamt
## European Patent Office
## Office européen des brevets

(19)

(11) Numéro de publication: **0 057 617**
**A2**

(12)

# DEMANDE DE BREVET EUROPEEN

(21) Numéro de dépôt: **82400004.6**

(51) Int. Cl.³: **B 60 N 1/06**

(22) Date de dépôt: **05.01.82**

(30) Priorité: **21.01.81 FR 8101028**

(43) Date de publication de la demande: **11.08.82**
**Bulletin 82/32**

(84) Etats contractants désignés: **DE GB IT SE**

(71) Demandeur: **COMPAGNIE INDUSTRIELLE DE MECANISMES en abrégé C.I.M. Société dite:, 6, Rue Barbès, F-92302 Levallois Perret (FR)**

(72) Inventeur: **Chevalier, Claude, 91 Route de Cordon, F-45600 Sully-Sur-Loire (FR)**

(74) Mandataire: **Polus, Camille et al, c/o Cabinet Lavoix 2, Place d'Estienne d'Orves, F-75441 Paris Cedex 09 (FR)**

(54) **Dispositif de réglage de la position d'un élément, notamment d'un siège de véhicule.**

(57) Ce dispositif comprend, à l'arrière du siège, un mécanisme (2) de réglage par crans comportant deux coulisseaux (11) à diamètres étagés actionnés par des cames hélicoïdales (17, 19) et reliés par des cannelures à un arbre transversal de synchronisation (4), et, à l'avant du siège, un mécanisme de réglage continu (3) à moteur électrique (10). Ainsi, on règle d'abord la hauteur de l'arrière du siège, puis son assiette.

1
## Dispositif de réglage de la position d'un élément, notamment d'un siège de véhicule.

La présente invention est relative à un dispositif de réglage de la position d'un élément, notamment d'un siège de véhicule, par rapport à son support, du type comprenant deux ferrures mobiles espacées transversalement fixées à l'élément, deux ferrures fixes espacées transversalement fixées au support, et des organes d'actionnement adaptés pour verrouiller simultanément les deux ferrures mobiles par rapport aux deux ferrures fixes dans plusieurs positions et déverrouiller simultanément les deux ferrures mobiles, ces organes d'actionnement comprenant d'une part, de chaque côté, un coulisseau transversal à diamètres étagés coulissant dans une première ferrure et engagé dans une fente de l'autre ferrure qui définit plusieurs trous circulaires au grand diamètre du coulisseau réunis par des segments dont la largeur est un peu supérieure au petit diamètre du coulisseau, et, d'autre part, un arbre transversal relié aux deux coulisseaux, et des moyens pour déplacer transversalement les deux coulisseaux en synchronisme.

Dans les dispositifs connus de ce type (voir par exemple le brevet GB 585 196), les deux coulisseaux sont rigidement solidaires de l'arbre transversal qui les relie et sont déplacés axialement dans le même sens par un levier de manoeuvre latéral. Ceci nécessite une trop grande précision dans l'écartement des ferrures et des coulisseaux pour fonctionner de façon fiable.

L'invention a pour but de fournir un dispositif simple et robuste supportant sans inconvénient des variations relativement importantes de distance transversale entre les deux couples de ferrures.

A cet effet, l'invention a pour objet un dispositif de réglage du type précité, caractérisé en ce l'arbre transversal est relié à l'un au moins des coulisseaux par une liaison coulissante, et en ce que les moyens de déplacement comprennent, pour chaque coulisseau, une came rotative solidaire du coulisseau et d'un organe d'entraînement en rotation, et une contre-came fixée à la première ferrure.

Dans un mode de réalisation avantageux, notamment dans le cas du réglage d'un siège de véhicule, le dispositif de réglage comprend un mécanisme à deux coulisseaux à une extrémité des ferrures et, à l'autre extrémité de celles-ci, de chaque côté, un autre mécanisme de réglage indépendant du premier, ces deux autres mécanismes étant synchronisés par un second arbre transversal relié par une liaison coulissante à l'un deux au moins.

L'invention est exposée ci-après plus en détail à l'aide des dessins annexés, qui en représentent seulement un mode d'exécution. Sur ces dessins;

la Fig. 1 est une vue en plan d'un dispositif de support réglable de siège de véhicule conforme à l'invention;

la Fig. 2 est une vue en élévation latérale de ce dispositif;

la Fig. 3 est une vue en élévation latérale, à plus grande échelle, de la partie arrière du dispositif;

la Fig. 4 est une vue prise en coupe suivant la ligne 4-4 de la Fig. 3;

la Fig. 5 est une vue analogue à la Fig. 3 de la partie avant du dispositif;

la Fig. 6 est une vue prise en coupe suivant la ligne 6-6 de la Fig. 5.

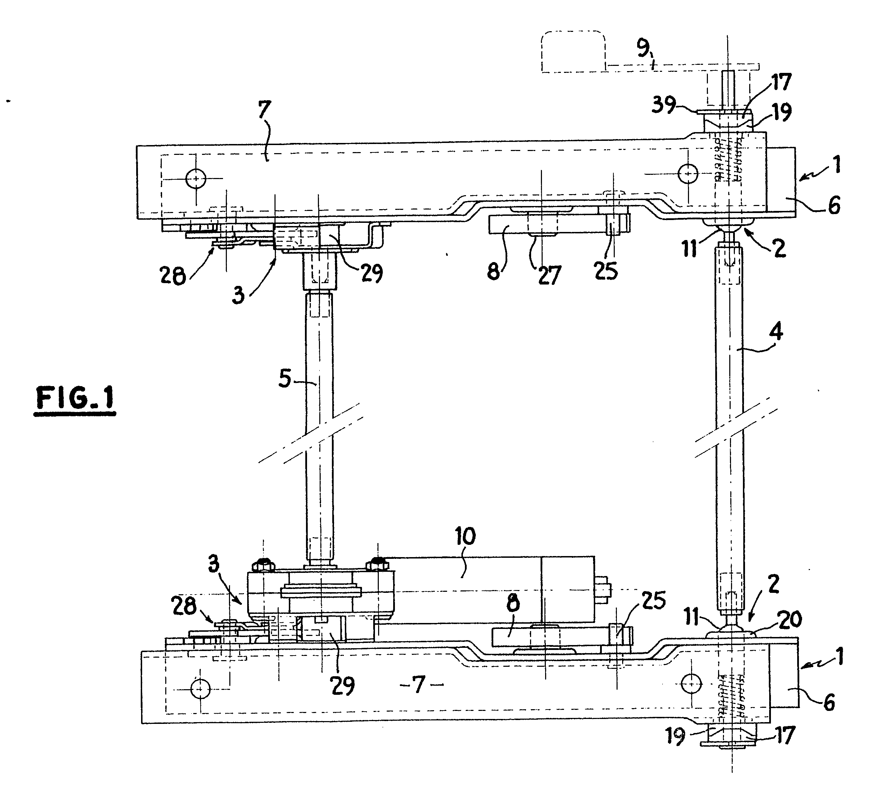

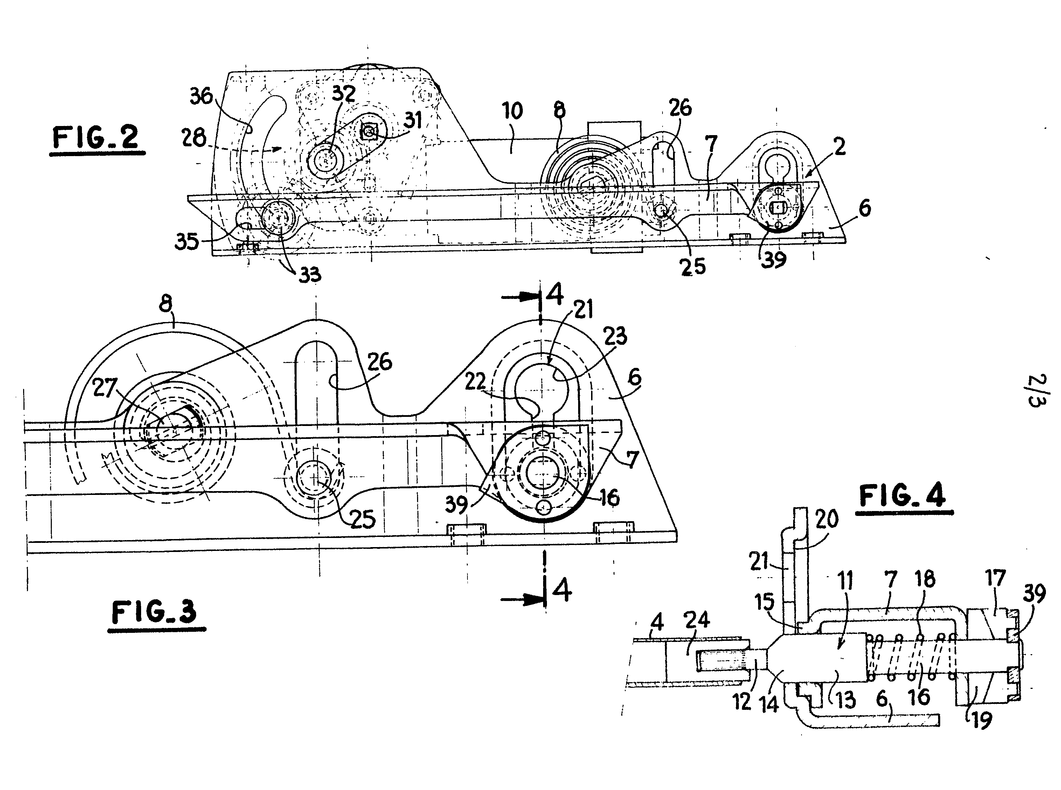

Le dispositif représenté aux Fig. 1 et 2 comprend deux couples 1 de ferrures longitudinales munis chacun d'un mécanisme de réglage arrière 2 et d'un mécanisme de réglage avant 3, ainsi que deux arbres de liaison transversaux arrière 4 et avant 5.

Un couple de ferrures 1 est constitué d'une ferrure ou équerre de support très rigide 6 fixée à la glissière supérieure mobile d'une coulisse (non représentée) de réglage de la position longitudinale du siège, et d'une ferrure ou équerre de siège 7, également très rigide, fixée le long d'un côté de la face inférieure d'un siège de véhicule (non représenté). On appellera "ferrure fixe" les ferrures 6 et "ferrures mobiles" les ferrures 7, les mots "fixes et mobiles" s'entendant par rapport à la direction verticale de déplacement.

Le dispositif comprend encore, de chaque côté, un ressort spiral 8 d'allègement, un levier 9 d'actionnement des deux mécanismes 2, et un moteur électrique ou groupe moto-réducteur 10 d'actionnement des deux mécanismes 3, ce moteur étant relié à un circuit approprié (non représenté) de manoeuvre dans les deux sens commandé par l'utilisateur du siège.

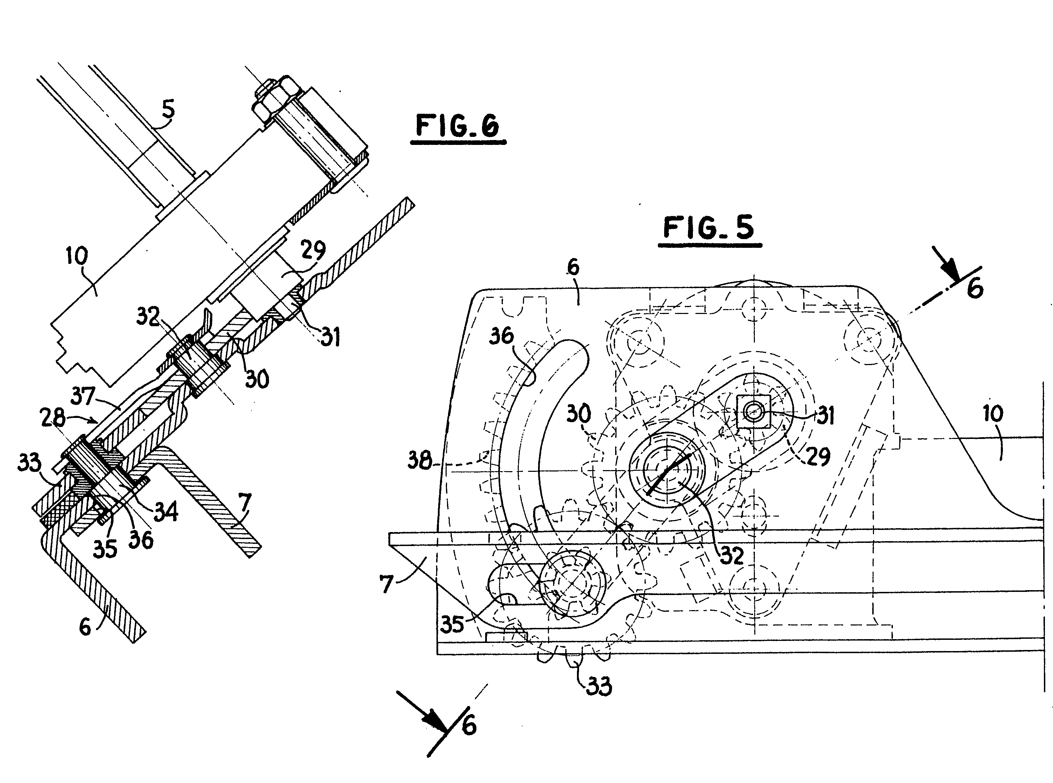

Chaque mécanisme 2 (Fig. 3 et 4) comprend un coulisseau 11 qui présente une partie intérieure 12 de petit diamètre, cannelée, une partie extérieure 13 de grand diamètre, lisse, et une partie de liaison tronconique 14. La partie 13 coulisse dans un collet 15 ménagé dans une branche d'une région arrière en U renversé de la ferrure mobile 7, et elle est prolongée par une tige 16 qui traverse un perçage de l'autre branche de ce U. L'extrémité libre de la tige 16 porte une came 17 en auge ou en V qui est sollicitée, par un ressort 18 entourant la tige 16 à l'intérieur du U, contre une contre-came conjuguée 19 fixée à la face extérieure de ce U et traversée par la tige 16.

Le collet 15 est reçu à coulissement vertical dans un embouti oblong 20 de guidage qui fait saillie vers l'intérieur sur la ferrure fixe 6. Dans le fond de cet embouti est ménagée une fente 21, d'orientation verticale, constituée d'un segment rectiligne étroit 22 s'élargissant à chaque extrémité en un trou circulaire 23. La largeur du segment 22 est un peu supérieure au diamètre de la partie intérieure 12 du coulisseau 11, tandis que

4

le diamètre des trous 23 est égal au diamètre de sa partie extérieure 13.

Les deux coulisseaux 11 sont coaxiaux et réunis par l'arbre 4 dont les extrémités sont emboîtées à force sur des embouts 24 cannelés qui coulissent sur les parties 12 des coulisseaux.

Sur la face intérieure de chaque ferrure mobile 7, légèrement en avant du mécanisme 2, fait saillie un rivet circulaire 25 traversant avec jeu une autre fente verticale 26 de la ferrure fixe 6. Le rivet 25 tend à être soulevé par l'extrémité extérieure du ressort 8, dont l'autre extrémité est fixée à un rivet 27 fixé à la ferrure fixe 6. La tête du rivet 25 maintient un léger jeu transversal entre les deux ferrures.

Chaque mécanisme avant 3 (Fig. 5 et 6) comprend un train d'engrenages réducteur 28 du type épicycloïdal, à dentures droites, constitué d'un pignon moteur 29 et d'un pignon intermédiaire 30 calés sur des axes 31, 32 tourillonnant dans la ferrure fixe 6, et d'un pignon mené étagé 33 dont le tourillon 34 traverse une boutonnière horizontale 35 de la ferrure mobile 7 ainsi qu'une fente en arc de cercle 36 de la ferrure fixe 6. Le pignon 33 comporte une denture de grand diamètre en prise avec le pignon 30, cette prise étant assurée par une biellette de liaison 37, et une denture de petit diamètre en prise avec un secteur denté 38 fixé à la ferrure fixe 6.

L'un des deux axes 31 est l'arbre de sortie du moteur électrique 10, lequel s'étend horizontalement le long de la face intérieure de la ferrure fixe 6 correspondante, à laquelle il est fixé. Cet axe 31 émerge de l'autre côté du moteur 10 et est relié à l'autre axe 31 par l'arbre avant 5, les liaisons étant des liaisons cannelées.

Le fonctionnement du dispositif ainsi décrit est le suivant.

L'arrière du siège peut prendre deux positions en hauteur correspondant respectivement à l'insertion de la partie 13 des deux coulisseaux 11 dans les deux trous 23 des ferrures de support 6. Pour passer d'une position à l'autre, on déverrouille simultanément les deux coulisseaux au moyen du levier commun 9, lequel est fixé à une plaque 39 solidaire d'une des deux cames 17. En soulevant le levier 9, celui-ci entraîne en rotation simultanément les deux cames 17, grâce à la liaison assurée par l'arbre 4. Le sens et l'amplitude (90°) de cette rotation sont déterminés par la forme de la plaque 39, qui bute en fin de course sur des butées appropriées (non représentées) du siège. En tournant d'un quart de tour, chaque came 17 "montée" sur sa contre-came 19 et se déplace vers l'extérieur, en entraînant dans ce sens le coulisseau 11 associé, à l'encontre du ressort 18.

Ceci amène les deux parties étroites 12 des coulisseaux dans le plan des deux fentes 21. L'utilisateur du siège peut alors soulever ou abaisser l'arrière du siège pour faire franchir aux parties 12 les segments 22 et les amener dans les autres trous 23. Pour effectuer un mouvement descendant, il suffit de peser sur l'arrière du siège. Pour effectuer un mouvement ascendant, il suffit d'alléger l'arrière du siège, et les ressorts 8 effectuent le soulèvement nécessaire. L'utilisateur relâche ensuite le levier 9, ce qui permet aux ressorts 18 de repousser vers l'intérieur les coulisseaux 11, les parties 14 puis 13 de ceux-ci pénétrant dans les trous 23 en regard et verrouillant les mécanismes 2 dans leur nouvelle position. Le mouvement combiné de rotation et de translation des coulisseaux facilite cette pénétration, et le passage d'une position à l'autre produit un déclic perceptible.

Cette opération définit un axe horizontal et transversal, qui est celui de l'arbre 4, autour duquel peut basculer l'ensemble du siège et des ferrures mobiles 7

6

pour régler l'assiette du siège. Ce réglage s'effectue simplement en entraînant le moteur 10 dans un sens ou dans l'autre, ce qui provoque le déplacement de la petite denture du pignon 33 le long du secteur denté 38.

Le réglage en hauteur assuré par les mécanismes 2 est nécessaire pour obtenir une bonne position de conduite et s'effectue généralement lorsque le véhicule est à l'arrêt. Le réglage d'assiette permet d'obtenir une position de confort optimale, éventuellement pendant la marche du véhicule.

La conception des mécanismes 2 leur permet de supporter des efforts très élevés, de sorte que le dispositif est compatible avec l'implantation des ancrages des ceintures de sécurité sur le siège lui-même.

Les mécanismes 3 possèdent un bon rendement. Le rapport de réduction des trains d'engrenages 28 permet l'utilisation d'un groupe moto-réducteur 10 du type utilisé dans les lève-glace, ce qui permet une standardisation appréciable. L'implantation de ce groupe 10 le long d'une ferrure fixe 6, avec son arbre de sortie 31 en position transversale, conduit à un encombrement très réduit.

Les efforts verticaux dus au poids du siège et aux vibrations sont appliqués par les bords horizontaux des fentes 35 aux tourillons 34 des pignons 33 et se reportent nettement plus sur les secteurs dentés 38 que sur les pignons intermédiaires 30, du fait de la différence de diamètre d'engrènement. Ceci assure une bonne protection des pignons moteurs 29,30 et du moteur 10.

La transmission du mouvement d'un couple de ferrures 1 à l'autre s'effectue par rotation par l'intermédiaire de liaisons cannelées. Une variation relativement importante de la distance transversale entre les couples 1 au montage est par conséquent permise sans inconvénient. De plus, la transmission entre les deux mécanismes 3 s'effectue sur les axes moteurs 31 à rotation rapide, et donc sous un couple faible, ce qui permet d'assurer une bonne synchronisation avec un arbre 5 de section réduite.

En variante, les fentes 21 peuvent bien entendu comporter plus de deux trous 23 pour augmenter le nombre de positions de rehausse du siège.

On peut également utiliser les mécanismes 3 à l'arrière, pour le réglage en hauteur, et les mécanismes 2 à l'avant, pour le réglage de l'assiette, afin de faciliter la manoeuvre des deux réglages pendant la marche du véhicule. Cependant, pour des raisons de sécurité déjà indiquées (robustesse plus grande des mécanismes 3), la disposition représentée est généralement préférable.

En variante encore, on peut remplacer le moteur 10 par un bouton rotatif de réglage manuel de l'assiette, auquel cas chaque mécanisme 3 est muni d'un frein du type "autolock" tel qu'utilisé dans les lève-glace. Une autre version manuelle consisterait à remplacer les mécanismes 3 par deux autres mécanismes 2, le réglage de l'assiette s'effectuant alors par crans, comme le réglage en hauteur, et non plus de façon continue.

Le profil des cames 17 peut être adapté à l'effort nécessaire. En particulier, les faces du V qu'elles forment peuvent être galbées pour leur conférer un profil doublement hélicoïdal.

8

REVENDICATIONS

1. Dispositif de réglage de la position d'un élément, notamment d'un siège de véhicule, par rapport à son support, du type comprenant deux ferrures mobiles (7) espacées transversalement fixées à l'élément, deux ferrures fixes (6) espacées transversalement fixées au support, et des organes d'actionnement adaptés pour verrouiller simultanément les deux ferrures mobiles par rapport aux deux ferrures fixes dans plusieurs positions et déverrouiller simultanément les deux ferrures mobiles, ces organes d'actionnement comprenant d'une part, de chaque côté, un coulisseau transversal (11) à diamètres étagés coulissant dans une première ferrure et engagé dans une fente (21) de l'autre ferrure (6) qui définit plusieurs trous circulaires (23) au grand diamètre (13) du coulisseau réunis par des segments (22) dont la largeur est un peu supérieure au petit diamètre (12) du coulisseau, et, d'autre part, un arbre transversal (4) relié aux deux coulisseaux, et des moyens (9, 16 à 19) pour déplacer transversalement les deux coulisseaux en synchronisme, ce dispositif étant caractérisé en ce que l'arbre transversal est relié à l'un au moins des coulisseaux par une liaison coulissante, et en ce que les moyens de déplacement (9, 16 à 19) comprennent, pour chaque coulisseau (11), une came rotative (17) solidaire du coulisseau et d'un organe (9) d'entraînement en rotation, et une contre-came (19) fixée à la première ferrure (7).

2. Dispositif de réglage suivant la revendication 1, caractérisé en ce que les moyens de déplacement (9, 16 à 19) comprennent des moyens (18) de rappel élastique des coulisseaux (11) en position verrouillée.

3. Dispositif de réglage suivant l'une des revendications 1 et 2, caractérisé en ce que la came (17) et la contre-came (19) sont du type hélicoïdal.

9

4. Dispositif de réglage suivant l'une quelconque des revendications 1 à 3, caractérisé en ce que, de chaque côté, la première ferrure (7) présente autour du coulisseau (11) un collet de guidage (15) coulissant dans un embouti          (20) de l'autre ferrure (6).

5. Dispositif de réglage suivant l'une quelconque des revendications 1 à 4, caractérisé en ce que les deux coulisseaux (11) sont adaptés pour se déplacer simultanément en sens inverses.

6. Dispositif de réglage suivant la revendication 5, caractérisé en ce que les coulisseaux (11) sont disposés à l'extérieur des ferrures (6,7).

7. Dispositif de réglage suivant l'une quelconque des revendications 1 à 6, caractérisé en ce qu'il comprend un mécanisme (2) à deux coulisseaux (11) à une extrémité des ferrures (6,7) et, à l'autre extrémité de celles-ci, de chaque côté, un autre mécanisme (3) de réglage indépendant du premier, ces deux autres mécanismes (3) étant synchronisés par un second arbre transversal (5) relié par une liaison coulissante à l'un deux au moins.

8. Dispositif de réglage suivant la revendication 7, caractérisé en ce que ledit autre mécanisme (3) est du type à variation continue et comprend un secteur denté (38) fixé à la ferrure fixe (6) et engrenant avec un train d'engrenages épicycloïdal (28) dont le pignon satellite (33) est porté par la ferrure mobile (7), le dispositif comprenant en outre un organe (10) d'entraînement d'un train d'engrenages et le second arbre transversal (5) reliant les deux trains d'engrenages.

10

9. Dispositif de réglage suivant la revendication 8, caractérisé en ce que le second arbre transversal (5) relie les pignons amont (29) des deux trains d'engrenages (23).

10. Dispositif de réglage suivant l'une des revendications 8 et 9, caractérisé en ce que l'organe d'entraînement est un motoréducteur électrique (10) dont l'arbre de sortie (31) émerge des deux côtés, porte d'un côté l'un des pignons amont (29) et est relié de l'autre côté au second arbre transversal (5) par des cannelures.

FIG.1

FIG.2

FIG.3

FIG.4

2/3

0057617

FIG.6

FIG.5